# EUROPÄISCHE PATENTSCHRIFT

(11) **EP 1 657 608 B1**
(45) Veröffentlichungstag und Bekanntmachung des Hinweises auf die Patenterteilung: **23.04.2008**
(21) Anmeldenummer: 05019944.7
(22) Anmeldetag: 14.09.2005
(51) Int. Cl.: G05B 19/418, H04L 12/42

(54) **Verfahren und Vorrichtung zum Betreiben eines Netzwerkes**
Method and apparatus for operating a network
Procédé et appareil pour actionner d'un réseau

(30) Priorität: 16.11.2004 DE 102004055330
(43) Veröffentlichungstag der Anmeldung: 17.05.2006
(73) Patentinhaber: Bosch Rexroth AG, 70184 Stuttgart (DE)
(72) Erfinder: Schultze, Stephan, 97816 Lohr am Main (DE); Kynast, Rigobert, 97816 Lohr am Main (DE); Leurs, Ludwig, 97816 Lohr am Main (DE); Schmid, Thomas, 97840 Hafenlohr (DE)

(56) Entgegenhaltungen:
- EP-A- 1 434 393
- DE-A1- 10 207 529
- DE-A1- 19 721 740
- KENNEL R ET AL: "DATENKOMMUNIKATION UEBER DAS BUSSYSTEM SERCOS INTERFACE" AUTOMATISIERUNGSTECHNISCHE PRAXIS - ATP, OLDENBOURG VERLAG. MUNCHEN, DE, Bd. 33, Nr. 7, 1. Juli 1991 (1991-07-01), Seiten 363-368, XP000243095 ISSN: 0178-2320

## Beschreibung

Die vorliegende Erfindung entspringt dem Gebiet der Datenkommunikation und beschreibt ein Verfahren sowie eine Vorrichtung für den Betrieb eines Netzwerkes. Ferner wird von der Erfindung ein Netzwerk mit entsprechendem Datentelegramm umfasst.

Im Stand der Technik sind Kommunikationssysteme bekannt. Insbesondere verteilte Kommunikationssysteme sind in vielen technischen Anwendungen anzutreffen. So werden verteilte Kommunikationssysteme beispielsweise in Automatisierungssystemen mit dezentraler Steuerungs- und Antriebstechnik eingesetzt, in denen oftmals eine Vielzahl von Einzelsystemen zeitlich synchron gesteuert und angetrieben werden. Ein solches Einzelsystem kann eine Antriebseinheit, beispielsweise mit einem Synchron- und Asynchronmotor sein, mit welcher eine von mehreren, zueinander interpolierenden oder eng miteinander gekoppelt arbeitenden Achsen angetrieben wird. Typische Anwendungsgebiete solcher Automatisierungssysteme mit dezentraler-Steuerungs- und Antriebstechnik sind Druck- oder auch Werkzeugmaschinen sowie auch Robotersysteme mit einer Vielzahl von zeitlich zueinander abgestimmt arbeitenden Förder- und Wirkelementen.

Derartige Kommunikationssysteme umfassen wenigstens zwei, in der Regel jedoch weitaus mehr Teilnehmer, die vorzugsweise hierarchisch mit einem als Zentralteilnehmer ausgebildeten Teilnehmer und den übrigen Teilnehmern als weiteren Teilnehmern des Kommunikationssystems ausgebildet bzw. angeordnet sind. Eine solche hierarchische Anordnungsstruktur ist beispielsweise als Master-Slave-Struktur mit dem Zentralteil- oder Hauptteilnehmer als "Master" oder "Master-Teilnehmer" (Hauptstation) und den weiteren Teilnehmern als "Slaves" oder "Slave-Teilnehmer" (Unter- oder Nebenstationen) bekannt. Der Zentralteilnehmer ist als zentraler Teilnehmer ausgebildet, der Steuersignale an die weiteren Teilnehmer generiert und versendet. Die weiteren Teilnehmer stehen zum Empfang dieser Steuerungssignale und zur bedarfsweisen weiteren Kommunikation mit dem Zentralteilnehmer sowie üblicherweise auch mit den anderen weiteren Teilnehmern in Kommunikationsverbindung. Die Slave-Teilnehmer beziehen sich dabei zumeist auf Prozessankopplungen, wie z.B. Sensoren und Aktoren, d.h. Ein-/Ausgabebaugruppen für analoge und digitale Signale, sowie Antriebe. Eine Dezentralisierung der Signalverarbeitung mit Datenvorverarbeitung bei den Slave-Teilnehmern ist erforderlich, um die Anzahl der übertragenden Daten gering zu halten und erfordert die Kommunikation zwischen dem Master-Teilnehmer und den weiteren Slave-Teilnehmern. Aus dem Stand der Technik sind hierzu im Wesentlichen drei Grundanordnungsstrukturen ("Topologien") bekannt. Die Ringstruktur, wobei ein von dem Zentralteilnehmer generiertes Signal diese durchläuft und somit die einzelnen weiteren Teilnehmer in serieller Reihenfolge passiert.

Die Busstruktur mit einer zentralen Busleitung an die sowohl der Zentralteilnehmer als auch weitere Teilnehmer angeschlossen sind. Der Signal- und Datentransfer wird in bekannter Weise über einen Datenbus bewerkstelligt. Bei längeren Wegstrecken der zentralen Busleitung ist es üblich, zur Verstärkung des Signals einen "Repeater" in die zentrale Busleitung zwischen zu schalten. Dies ist allerdings auch bei der Ringstruktur sinnvoll, wobei dann der "Repeater" vorzugsweise innerhalb eines Teilnehmers realisiert ist.

Die dritte Struktur ist eine Sternstruktur mit einem in die Verbindungsleitung integrierten, zentralen Schaltungselement ("Switch"). Ein von dem Zentralteilnehmer generiertes Signal wird mittels des Schaltungselements dem als Adressaten spezifizierten Teilnehmer zugestellt.

Die drei genannten Strukturen können auch Teil eines komplexeren Systems sein, in welchem mehrere Grundanordnungsstrukturen miteinander verflochten realisiert sind. Die Generierung eines übergeordneten Steuerungssignals obliegt dann einem der Zentralteilnehmer oder auch einem übergeordnetem Zentralteilnehmer.

Ferner sind aus dem Stand der Technik auch verteilte Kommunikationssysteme bekannt, bei denen die Masterfunktion zwischen mehreren Teilnehmern oder sogar zwischen allen Teilnehmern wechseln kann. Solche "Multi-Master"-Systeme bedingen, dass mehrere Teilnehmer die Funktionalität eines zentralen Teilnehmers aufweisen und bei Vorliegen einer definierten Bedingung diese Funktion auch ausüben. Hierbei wird ein zuvor als weiterer Teilnehmer fungierender Teilnehmer Zentralteilnehmer und der bisherige Zentralteilnehmer weiterer Teilnehmer des Kommunikationssystems. Eine mögliche Bedingung für einen solchen Wechsel kann beispielsweise das Ausbleiben eines Kontrollsignals des bisherigen Zentralteilnehmers sein.

Die EP 1 434 393 A2 zeigt ein Doppelringnetzwerk mit mehreren Netzwerkteilnehmern und ein Verfahren zur Bestimmung der Netzwerktopologie. Bei diesem Verfahren soll insbesondere eine Topologiedatenbank zwischen zwei benachbarten Netzwerkteilnehmern ausgetauscht werden, welche Informationen darüber enthält, auf welche Weise die Teilnehmer des Netzwerks miteinander verbunden sind. Diese Informationen umfassen die Beschreibung der gegenseitigen physikalischen Verbindung, d.h. 'über keinen Ring', 'nur über den inneren Ring', 'nur über den äußeren Ring' oder 'über beide Ringe'. Die Anschlüsse der Kommunikationsschnittstellen sind fest den Ringen bzw. Netzwerkkanälen zugewiesen.

Die DE 102 07 529 A1 zeigt ein Netzwerk mit mehreren Netzwerkteilnehmern, das in einer ringförmigen Struktur ausgebildet ist, aber mit einer linienförmigen bzw. busförmigen Topologie betrieben wird. Dies wird dadurch erreicht, dass die Ringstruktur bei einem Redundanzmanager unterbrochen ist. Bei Auftreten eines Fehlers, also einer Unterbrechung der linienförmigen Topologie zwischen zwei Koppelgeräten, wird die ursprüngliche Unterbrechung bei dem Redundanzmanager aufgehoben, um erneut eine linienförmige Netzwerktopologie bereitzustellen.

Aktuell ist von der Anmelderin unter der Bezeichnung SERCOS Interface® (SErial Real Time COmmunication System) ein verteiltes Kommunikationssystem mit ringförmiger Struktur auf dem Markt erhältlich, welches über einen Zentralteilnehmer Steuerungssignale an weitere Teilnehmer generiert und sendet. Die weiteren Teilnehmer sind üblicherweise mittels Lichtwellenleiter mit dem Zentralteilnehmer verbunden. Das SERCOS interface® spezifiziert eine streng hierarchische Kommunikation. Daten werden in Form von Datenblöcken, den sogenannten Telegrammen oder "Frames" in zeitlich konstanten Zyklen zwischen der Steuerung (Master) und den Unterstationen (Slave) ausgetauscht. Unmittelbare Kommunikation zwischen den weiteren Teilnehmern bzw. Unterstationen findet nicht statt. Zusätzlich werden Dateninhalte festgelegt, d.h. die Bedeutung, Darstellung und Funktionalität der übertragenen Daten ist in großem Maße vordefiniert. Bei dem SERCOS interface® entspricht dem Master die Anschaltung der Steuerung an den Ring und dem Slave die Anschaltung einer oder mehrerer Unterstationen (Antriebe oder I/O-Stationen). Mehrere Ringe an einer Steuerung sind möglich, wobei die Koordination der einzelnen Ringe zueinander Aufgabe der Steuerung ist und nicht vom SERCOS interface® spezifiziert wird.

Bevorzugt wird dieses Kommunikationssystem zur Regelung und Steuerung von verteilt angeordneten Motoren, beispielsweise von Synchron- oder Asynchronmotoren, eingesetzt. Die weiteren Teilnehmer des Kommunikationssystems sind dann die Regelgeräte zur Regelung und Steuerung jeweils eines Motors. Haupteinsatzgebiete dieses Kommunikationssystems sind insbesondere die Antriebe von Werkzeugmaschinen, Druckmaschinen, Wirkmaschinen und Maschinen der allgemeinen Automatisierungstechnik. Bei dem SERCOS interface® gibt es fünf verschiedene Kommunikationsphasen. Die ersten vier Phasen (Phase 0 bis Phase 3) dienen der Initialisierung der Teilnehmer, die fünfte Phase (Phase 4) ist der reguläre Betrieb. Innerhalb eines Kommunikationszyklus tauscht jede Unterstation Daten mit der Steuerung aus. Der Zugriff auf den Ring ist deterministisch innerhalb kollisionsfreier Sendezeitschlitze. Bei dem SERCOS interface® gibt es drei verschiedene Telegrammarten, nämlich Master-Synchronisationstelegramme, Antriebstelegramme und Master-Datentelegramme. Master-Synchronisationstelegramme (MST) werden vom Master-Teilnehmer ausgesandt, besitzen nur ein kurzes Datenfeld und dienen zur Vorgabe der Kommunikationsphase und als Zeitreferenz. Antriebstelegramme (AT) werden von Slave-Teilnehmern gesendet und weisen beispielsweise Ist-Werte eines durch den jeweiligen Slave-Teilnehmer angesteuerten Antriebs auf. Master-Datentelegramme (MDT) sind Summen(rahmen)telegramme mit Datenfeldern für alle Slave-Teilnehmer. Mittels Master-Datentelegrammen werden vom Master an den jeweiligen Slave Soll-Werte übermittelt. Jede Unterstation bekommt während der Initialisierung den Beginn und die Länge ihres (Unter-)Datenfeldes mitgeteilt. Das SERCOS interface® definiert dabei folgende Arten von Daten, nämlich Betriebsdaten, Steuer- bzw. Statusinformationen und nicht zyklisch übertragene Daten. Die Betriebsdaten (Prozessdaten) werden in jedem Zyklus übertragen. Beispiele sind hierfür Soll- und Istwerte. Die Länge des Betriebsdatenbereichs ist parametrisierbar, sie wird bei der Initialisierung festgelegt und bleibt während des Betriebs des Ringes konstant.

Die Steuerinformation, welche von den Master-Teilnehmern zu den Slave-Teilnehmern gesendet wird, und die Statusinformation, welche von den Slave-Teilnehmern zu den Master-Teilnehmern gesendet wird, sind beispielsweise Freigabesignale und Bereitschaftsmeldungen. Nicht zyklisch übertragene Daten (Service-Kanal) umfassen Einstellparameter, Diagnosedaten und Warnungen. Außerdem werden Kommandosequenzen über diese nicht zyklische Übertragung gesteuert. Ein Kommunikationszyklus vom Zentralteilnehmer wird durch Aussendung eines MST gestartet. Alle kommunikationsspezifischen Zeiten werden auf das Ende dieses kurzen und ca. 25 µs langen Telegramms bezogen. Die Unterstationen senden nun nacheinander jeweils in ihren Sendezeitschlitzen ihre Antriebstelegramme (AT). Nach dem letzten AT sendet der Master das MDT. Der nächste Zyklus beginnt wieder mit einem MST. Der Zeitabstand zwischen zwei MSTs wird SERCOS-Zykluszeit genannt.

Die Kommunikation wird bei dem SERCOS interface® auf das Ende des MST synchronisiert. Dabei wird in vorzugsweise äquidistanten Zeitschritten von dem Zentralteilnehmer ein Synchronisationstelegramm generiert und in den Kommunikationsring eingespeist. An den Empfang des Synchronisationstelegramms und des Synchronisationssignals ist in den Regelgeräten üblicherweise über einen Zeitparameter eine Soll-/Istwertverarbeitung angekoppelt, die zu einer Bestimmung und Aufgabe von Steuer- und Regelparametern an die jeweiligen Stellmotoren führt.

Da die Nebenteilnehmer als Slave fungieren und die Anschaltung einer oder mehrerer Unterstationen (Antriebe oder I/O-Stationen) repräsentieren, besteht in der Praxis häufig die Erfordernis einer Neukonfiguration eines bestehenden Netzwerkes. Dies wird beispielsweise notwendig, wenn eine vorhandene Automatisierungsstraße mit neuen Komponenten erweitert werden soll, wobei neue Teilnehmer eingebunden werden müssen. Außerdem muss bei einer festen Zuordnung der für die Redundanz erforderlichen Netzwerkkanäle eine Verkabelung vorgeschrieben werden. Hierbei ist genau darauf zu achten, wie die Teilnehmer hardwareseitig angebunden werden und bei fehlerhaften Konfigurationen können schwerwiegende Betriebsstörungen und eine kostenintensive Fehlerbehandlung erforderlich werden.

Der Erfindung liegt daher die Aufgabe zugrunde, die Nachteile des Standes der Technik zu vermeiden und eine leicht erweiterbare und wartungsfreundlich Lösung für ein Netzwerk der Eingangs genannten Art zu finden.

Diese Aufgabe wird bei einem Verfahren der eingangs genannten Art dadurch gelöst, dass Netzwerkteilnehmer mittels Telegrammen selbständig ermitteln, an welche Netzwerkkanäle sie angeschlossen sind. Die Nebenteilnehmer können damit Netzwerkkanäle ihren Kommunikationsports eindeutig zuordnen.

Bei dem eingangs erwähnten Netzwerk handelt es sich um ein redundantes Kommunikationssystem. Hier wird vorzugsweise die gleiche Information mittels wenigstens zwei separater Übertragungswege (Kanäle) zwischen den Netzwerkteilnehmern ausgetauscht. Beide Kanäle können die gleiche, aber auch unterschiedliche Informationen fassen und sind voneinander unabhängig aufgebaut. Im Falle eines Ausfalls eines Kanals (z.B. Kabelbruch) fungiert der zweite Kanal sozusagen als Backup. Ermitteln die Netzwerkteilnehmer die Art und Weise ihrer Einbindung in das Netzwerk selbst, so erhält man durch das erfindungsgemäße Verfahren ein intelligentes Netzwerk bei dem jeder Teilnehmer seine Hardware und Software dynamisch bezüglich der äußeren Gegebenheiten adaptieren kann. Insbesondere bei der Neukonfiguration und Erweiterung eines Netzwerkes ergibt dies eine Verbesserung im Vergleich zum Stand der Technik. Auch die Fehleranfälligkeit, zum Beispiel durch vertauschte Kanäle wird damit reduziert, da die Teilnehmer ihre Ports entsprechend des hardwaremäßigen Aufbaus selbst konfigurieren können und damit ein Fehler durch verwechselte Kanäle erst gar nicht auftreten wird.

Bevorzugt umfasst das Netzwerk wenigstens einen Zentralteilnehmer und wenigstens einen Nebenteilnehmer. Dann kann der Zentralteilnehmer die Nebenteilnehmer synchronisieren und während einer Initialisierungsphase auf nur einem Netzwerkkanal mit Nebenteilnehmern gezielt kommunizieren, bzw. Telegramme an diese senden. Mittels dieser Kommunikation können die Nebenteilnehmer den Kanal, auf dem der Zentralteilnehmer Telegramme versendet, eindeutig identifizieren und einem ihrer Ports zuordnen. Dieser Kanal übernimmt die Funktion des Primärkanals, während der andere Kanal nun ebenfalls eindeutig zuordenbar ist und den Sekundärkanal im weiteren Betrieb repräsentiert.

Besonders bevorzugt werden auf allen Kanälen nach der Initialisierungsphase Telegramme gleichen Inhalts gesendet. Dies schafft die Redundanz. Selbstverständlich könnten die Telegramme auch unterschiedliche Inhalte umfassen, eine Redundanz wäre dann jedoch nicht mehr gegeben.

Ganz besonders bevorzugt sendet der Zentralteilnehmer stets bei Aufnahme eines neuen Nebenteilnehmers eine Kanalkennung zur Kanalidentifikation. Bei der Kanalidentifikation handelt es sich um ein Datenfeld innerhalb eines Telegramms, welches die Identifikation des verwendeten Kanals ermöglicht, also beispielsweise eine Kanalnummer enthält. Der Nebenteilnehmer wertet diese Kanalidentifikation aus und kennt damit seine Anbindung im Netzwerk bezüglich seiner Ports. Hier ein kurzes Beispiel anhand eines Automatisierungsnetzwerkes. Wird ein Antrieb als Nebenteilnehmer nach der Initialisierungsphase in das Netzwerk eingebunden, so würde der Antrieb den seinen Ports zugeordneten Primär- und/oder Sekundärkanal nicht ohne weiteres erkennen. Die Steuerung als Zentralteilnehmer kennzeichnet in einem solchen Falle mittels eines sogenannten "Hot-Plug-in-Feldes" innerhalb eines vom Antrieb empfangenen Telegramms den Primärkanal, so dass der Antrieb den Primärkanal eindeutig einem seiner Kommunikationsports zuordnen kann. Wichtig ist hier, dass die Kanalkennung antizyklisch und nur bei Neuzuschaltung eines Teilnehmers erfolgt.

Die alternative Möglichkeit zur Identifikation eines Netzwerkkanals durch einen Netzwerkteilnehmer ist gegeben, wenn wenigstens ein Zentralteilnehmer und wenigstens einen Nebenteilnehmer vorhanden ist, wobei der Zentralteilnehmer zyklisch oder zumindest in regelmäßigen Abständen Telegramme mit einer Kanalkennung zur Kanalidentifikation versendet. Jeder Nebenteilnehmer kann dann zu jeder Zeit feststellen, also auch nach der Initialisierungsphase, mit welchem Übertragungskanal (Primärkanal oder Sekundärkanal) welcher seiner Eingänge verbunden ist. Das ist besonders von Vorteil, wenn mittels "Hot-Plug-in" ein Nebenteilnehmer nachträglich ins Netzwerk eingefügt wird. Das zuvor erwähnte antizyklisch eingefügte "Hot-Plug-in-Feld" ist wegen der zyklisch gesendeten Kanalkennung nicht mehr erforderlich. Bei vertauschten Anschlüssen kann der Nebenteilnehmer automatisch und selbständig die richtige Zuordnung zu den verwendeten Übertragungskanälen ohne äußeres Zutun und ohne Zeitverlust gewährleisten. Auch die Netzwerktopologie ist damit einfach ermittelbar. Empfängt ein Nebenteilnehmer auf beiden Kommunikationsschnittstellen bzw. Anschlüssen bzw. Ports Telegramme gleichen Typs, dann befindet er sich in einer Linienstruktur. Empfängt ein Nebenteilnehmer an beiden Anschlüssen unterschiedliche Telegrammtypen, dann befindet er sich in einer Ringstruktur.

Vorteilhafterweise weist das Netzwerk eine ringförmige Topologie auf. Die Redundanz kann hier beispielsweise mittels eines Doppelringsystems mit gegenläufigen Ringen hardwareseitig einfach sichergestellt werden, wobei ein erster Ring den Primärkanal und ein zweiter Ring den Sekundärkanal darstellen würde.

Die Aufgabe wird bei einer eingangs genannten Vorrichtung auch dadurch gelöst, dass Netzwerkteilnehmer Mittel zur Identifikation der Netzwerkkanäle und/oder der Netzwerktopologien umfassen. Die Netzwerkteilnehmer werden somit in die Lage versetzt, sich bei vertauschten Anschlüssen selbst zu konfigurieren und für ein vorhandenes Netzwerk zu adaptieren. Eine gegebenenfalls selbst erkannte (siehe oben) Netzwerktopologie hilft bei der Fehleranalyse.

Vorzugsweise umfasst das Netzwerk wenigstens einen Zentralteilnehmer sowie wenigstens einen Nebenteilnehmer und wenigstens zwei Kanäle, wobei eine ringförmige oder linienförmige Netzwerktopologie vorliegt. Der Zentralteilnehmer kann als Master und die Nebenteilnehmer können als Slaves fungieren, wobei der Master eine Leitfunktion übernimmt. Die Ringtopologie erleichtert den redundanten Aufbau, die Linientopologie spart Materialkosten ein.

Besonders bevorzugt umfasst jeder Teilnehmer wenigstens zwei Kommunikationsschnittstellen mit jeweils wenigstens zwei Anschlüssen, wobei jeder Anschluss entweder die Funktion eines Einganges und/oder eines Ausganges ausübt. Dies ermöglicht die einfache Realisierung einer P2P-Struktur (peer to peer) zwischen den Teilnehmern, insbesondere zwischen den Nebenteilnehmer, so dass jeder Teilnehmer auch als "Repeater" fungieren und Datentelegramme verstärkt und/oder aufbereitet weiterleiten kann. Diese Variante verhindert auch beim Vertauschen der Nebenteilnehmeranschlüsse negative Folgen für die Funktion des Netzwerkes, da jeder Nebenteilnehmeranschluss sowohl Daten entgegennehmen als auch Daten aussenden kann.

Wird ein Netzwerk mit einer Vorrichtung gemäß einem der Vorrichtungsansprüche ausgestattet, so kann es Netzwerkkomponenten automatisch verwalten.

Besonders vorteilhaft ist die Erfindung, wenn es sich um ein Netzwerk für Automatisierungszwecke handelt, welches zumindest eine Antriebseinheit und eine Steuereinheit umfasst. Der Vorteil ergibt sich aus der flexiblen Konfigurierbarkeit.

Ein solches Netzwerk verwendet vorteilhafterweise ein Datentelegramm, welches ein Teilfeld mit Kanalinformationen umfasst, sofern das Netzwerk mehr als einen Übertragungskanal nutzt. Ein Datentelegramm mit dieser Struktur erleichtert die Realisierung eines sich selbst konfigurierenden Systems und unterstützt sogenannte "Hot-plug-in"- Lösungen.

Besonders empfehlenswert ist es, wenn die Kanalinformation vom SERCOS ® - Master Daten Telegramm (MDT) und/oder vom SERCOS ® - Antriebstelegramm (AT) des SERCOS interfaces ® umfasst ist. Dieses Interface wird vorzugsweise in der Automatisierungstechnik eingesetzt.

Die Erfindung wird nachfolgend anhand der Beschreibung eines bevorzugten Ausführungsbeispiels unter Bezugnahme auf die beigefügten Zeichnungen näher erläutert. In den Zeichnungen bezeichnen dieselben Bezugszeichen dieselben entsprechenden Elemente. Dabei bilden alle beschriebenen und/oder bildlich dargestellten Merkmale für sich oder in beliebiger sinnvoller Kombination den Gegenstand der vorliegenden Erfindung, und zwar unabhängig von ihrer Zusammenfassung in den Patentansprüchen oder deren Rückbeziehungen. In den Zeichnungen zeigen:
Fig. 1 eine schematische Darstellung eines erfindungsgemäßen redundanten Kommunikationssystems in Ringstruktur;
Fig. 1a ein Detail eines ersten Netzwerkteilnehmers;
Fig. 1b ein Detail eines zweiten Netzwerkteilnehmers;
Fig. 2 eine schematische Darstellung eines erfindungsgemäßen Kommunikationssystems in Linienstruktur;
Fig. 2a ein Detail eines ersten Netzwerkteilnehmers;
Fig. 2b ein Detail weiterer Netzwerkteilnehmer;
Fig. 2c ein Detail eines dritten Netzwerkteilnehmers.

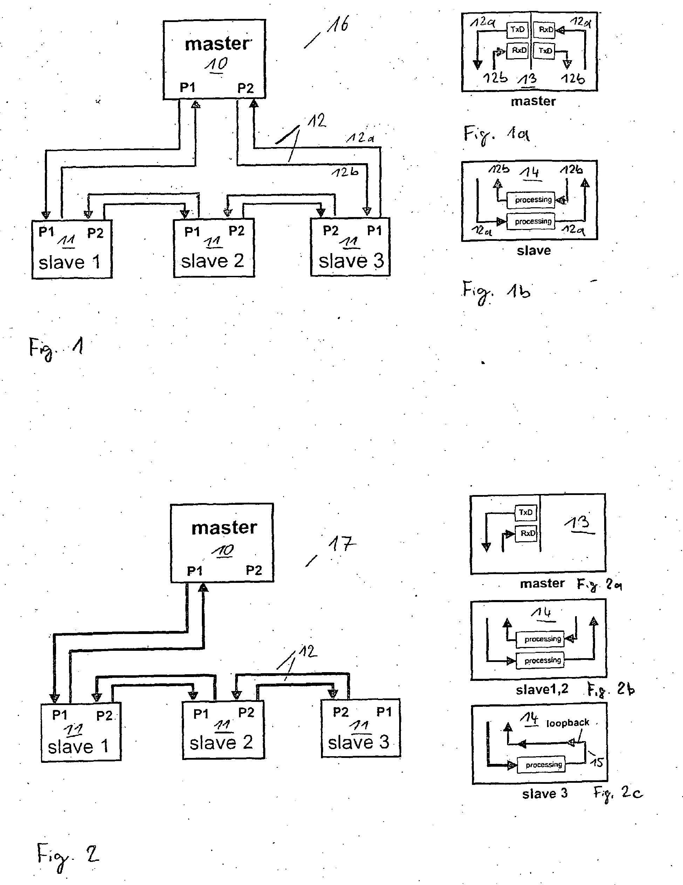

Grundlage der Figuren 1 und 2 ist ein SERCOS ® - Netzwerk 12, welches mehrere Slaves 11 mit integrierten Repeatern und SERCOS - interface ® sowie wenigstens einen Master 10 ebenfalls mit SERCOS - interface ® umfasst. Die Kommunikation zwischen den Netzwerkteilnehmern (Master, Slaves) ist mittels Punkt-zu-Punkt Verbindungen realisiert.

Jeder Teilnehmer 10, 11 umfasst zwei Kommunikationsanschlüsse, nämlich Port P1 und Port P2. Port P1 und Port P2 sind austauschbar, das heißt Port P2 kann die Funktion von Port P1 und Port P1 die Funktion von Port P2 übernehmen. In der Praxis bedeutet dies, daß die Kabel an den Ports vertauscht angeschlossen werden könnten, ohne die korrekte Funktion des Ports zu beeinflussen.

Die Topologie kann entweder auf einer Ringstruktur 16 (Figur 1) oder auf einer Linienstruktur 17 (Figur 2) basieren. Ein Ring 16 besteht immer aus zwei logischen Kanälen 12a, b; eine Linie 17 umfasst immer nur einem logischen Kanal.

Mittels der Ringstruktur 16 wird eine Redundanz erreicht, denn sie umfasst einen Primärkanal 12a und einen Sekundärkanal 12b, der üblicherweise identische Informationen überträgt. Dadurch wird es auch einfach möglich den Ring 16 zu öffnen und neue Teilnehmer während des Betriebs hinzuzuschalten (Hot plug in).

Die Linienstruktur 17 dagegen besteht entweder aus einem Primärkanal 12a oder einem Sekundärkanal 12b. Der physikalisch letzte Slave der Linienstruktur 17 ist stets mittels einer Loopbackfunktion 15 beschaltet. Das wird in Figur 2c an Slave 3 deutlich. Slave 3 nutzt nur einen einzigen seiner Ports P1 oder P2, denn kein weiterer Slave 11 ist ihm nachgeschaltet. Slave 3 stellt damit das letzte Glied in der Kette dar. Die Figur 2a zeigt die Nutzung der Ports P1/2 am Master 10 in Verbindung mit der Linienstruktur. Hier wird entweder Port P1 oder Port P2 für den Empfang bzw. das Senden von Daten genutzt. Figur 2b zeigt, dass Slave 1 und 2 jeweils beide Ports P1 und P2 nutzen, um mittels eines logischen Kanals empfangene Daten weiterzuleiten.

Vergleicht man die Beschaltungen der Linienstruktur-Teilnehmer 10, 11 mit der der Ringstruktur-Teilnehmer 10, 11, so besteht der Unterschied darin, dass beide Ports P1 und P2 des Ringstruktur-Masters 10 genutzt werden, wobei beide Ports in der Lage sind Daten gleichzeitig zu senden und zu empfangen. Der in Figur 1 a dargestellte Masterport 13 empfängt beispielsweise Daten mittels des Sekundärkanals 12b und sendet Daten mittels des Primärkanals 12a über seinen Port P1. Gleichzeitig empfängt er Daten mittels des Primärkanals 12a und sendet Daten mittels des Sekundärkanals 12b über seinen Port P2. Ein Ringstruktur-Slave 11 empfängt wie ein Linienstruktur-Slave 11 Daten mittels Primärkanal 12a und sendet Daten mittels Sekundärkanal 12b über Port P1. Mittels Port P2 empfängt er Daten per Sekundärkanals 12b und versendet Daten mittels des Primärkanals 12a via Port P2. Eine Ausnahme stellt der Linienstruktur-Slave 11 Nr. 3 dar, siehe Beschreibung weiter oben.

Folgende erfindungsgemäße Vorgehensweisen sind möglich, um in einer Ringstruktur die Portanschlüsse eines Teilnehmers einem Kanal korrekt zuzuordnen. Der Master 10 überträgt Telegramme während der Initialisierung (Phase 0 bis 3) nur auf einem logischen Kanal 12a (Primärkanal) des Netzwerkes 12. Die Slaves 11 empfangen die Telegramme auf einem ihrer beiden Ports P1/2, je nach Anschaltung ans Netzwerk. Der aktive Slave-Anschluss wird dann dem Primärkanal zugeordnet. Nach der Initialisierung überträgt der Master Telegramme mit gleichen Inhalt auf beiden Kanälen 12a,b. Damit ist dann logischerweise der zuvor nicht aktive Slave-Anschluss dem Sekundärkanal zugeordnet.

Alternativ dazu kennzeichnet der Master die Telegramme stets und unabhängig von einer' Initialisierung als Primärtelegramme für den logischen Kanal 12a. und als Sekundärtelegramme für den logischen Kanal 12b oder umgekehrt. Die Kennzeichnung befindet sich dabei in einem Typenfeld des Telegramms. Damit kann jeder Slave 11 zu jeder Zeit feststellen an welchen Kanälen seine Portanschlüsse angekoppelt sind. Das ist ganz besonders von Bedeutung, wenn ein Slave 11 zu einem späteren Zeitpunkt in die Kommunikation mit aufgenommen wird (Hot plug in). Voraussetzung für die sichere Funktion ist, dass der Master 10 eine einmal gewählte Kanalzuordnung beibehält.

Die Kanalkennungen werden vorzugsweise im SERCOS ® Header des Master Daten Telegramms MDT oder des Antriebstelegramms AT eingebunden.

Die Netzwerktopologie kann zusätzlich wie folgt erkannt werden. Empfängt ein Slave 11 auf beiden Ports P1 und P2 Telegramme des gleichen Typs (entweder Primärkanal- oder Sekundärkanaltelegramme), dann befindet er sich in einer Linienstruktur 17. Empfängt der Slave auf dem einen Port P1/2 ein Primärkanaltelegramm und auf dem anderen Port P 2/1 ein Sekundärkanaltelegramm, dann befindet er sich in einer Ringstuktur 16.

### Bezugszeichenliste

- 10: Zentralteilnehmer
- 11: Nebenteilnehmer
- 12: redundantes Netzwerk
- 12a: Primärkanal (logischer Kanal 1)
- 12b: Sekundärkanal (logischer Kanal 2)
- 13: Zentralteilnehmeranschluss
- 14: Nebenteilnehmeranschluss
- 15: Rückführung
- 16: Ringstruktur
- 17: Linienstruktur
- P1: Netzwerkteilnehmerport 1
- P2: Netzwerkteilnehmerport 2

## Patentansprüche

1. Verfahren zum Betreiben eines redundanten Kommunikationsnetzwerkes (12), bei dem wenigstens zwei Netzwerkteilnehmer (10, 11) jeweils über wenigstens zwei Netzwerkkanäle (12a, 12b) miteinander verbindbar sind, wobei jede Netzwerkteilnehmer (10, 11) Kommunikationsschnittstellen (P1, P2) aufweist,
**dadurch gekennzeichnet, dass** ein Netzwerkteilnehmer (10, 11) mittels eines Telegramms ermittelt, welcher Netzwerkkanal (12a, 12b) an welche seiner Kommunikationsschnittstellen (P1, P2) angeschlossen ist.

2. Verfahren nach Anspruch 1, **dadurch gekennzeichnet, dass** das Netzwerk (12) wenigstens einen Zentralteilnehmer (10) und wenigstens einen Nebenteilnehmer (11) umfasst, wobei der Zentralteilnehmer (10) während einer Initialisierungsphase auf nur einem ersten Netzwerkkanal (12a, 12b) mit dem Nebenteilnehmer (11) kommuniziert, wobei der erste Netzwerkkanal (12a, 12b) als Primärkanal definiert wird.

3. Verfahren nach Anspruch 2, **dadurch gekennzeichnet, dass** auf allen Kanälen (12a, 12b) nach der Initialisierungsphase Telegramme gesendet werden, wobei die Telegramme auf unterschiedlichen Kanälen (12a, 12b) vorzugsweise den gleichen Inhalt aufweisen.

4. Verfahren nach Anspruch 2 oder 3, **dadurch gekennzeichnet, dass** der Zentralteilnehmer(10) bei Aufnahme eines neuen Nebenteilnehmers (11) in das Netzwerk (12) antizyklisch eine Kanalkennung zur Kanalidentifikation sendet.

5. Verfahren nach Anspruch 1, **dadurch gekennzeichnet, dass** das Netzwerk (12) wenigstens einen Zentralteilnehmer (10) und wenigstens einen Nebenteilnehmer (11) umfasst, wobei der Zentralteilnehmer (10) Telegramme mit Kanalkennung zur Kanalidentifikation sendet.

6. Verfahren nach einem der vorhergehenden Ansprüche, **dadurch gekennzeichnet, dass** das Netzwerk (12) eine ringförmige (16) oder linienförmige (17) Netzwerktopologie verwendet.

7. Netzwerkteilnehmer (10, 11) eines redundanten Kommunikationsnetzwerkes (12), der jeweils über wenigstens zwei Netzwerkkanäle (12a, 12b) mit einem anderen Netzwerkteilnehmer (10, 11) verbindbar ist, wobei der Netzwerkteilnehmer (10, 11) Kommunikationsschnittstellen (P1, P2) aufweist, **dadurch gekennzeichnet, dass** der Netzwerkteilnehmer (10, 11) Mittel zur Identifikation des jeweils an einer Kommunikationsschnittstelle (P1, P2) angeschlossenen Netzwerkkanals (12a, 12b) mittels eines Telegramms aufweist.

8. Netzwerkteilnehmer (10, 11) nach Anspruch 7, **dadurch gekennzeichnet, dass** das Netzwerk (12) wenigstens einen Zentralteilnehmer (10) sowie wenigstens einen Nebenteilnehmer (11) umfasst, wobei eine ringförmige (16) oder linienförmige (17) Netzwerktopologie vorliegt.

9. Netzwerkteilnehmer (10, 11) nach einem der Ansprüche 7 bis 8, **dadurch gekennzeichnet, dass** jede Kommunikationsschnittstelle (P1, P2) jeweils wenigstens zwei Anschlüsse umfasst, wobei jeder Anschluss entweder die Funktion eines Einganges und/oder eines Ausganges ausübt.

10. Netzwerk (12) mit einem Netzwerkteilnehmer (10, 11) gemäß einem der Ansprüche 7 bis 9.

11. Netzwerk (12) gemäß Anspruch 10, **dadurch gekennzeichnet, dass** es sich um ein Netzwerk (12) für Automatisierungszwecke handelt, welches zumindest eine Antriebseinheit (11) und eine Steuereinheit (10) als Netzwerkteilnehmer (10, 11) umfasst.

12. Datentelegramm, insbesondere für ein Netzwerk nach einem der Ansprüche 10 oder 11, **dadurch gekennzeichnet, dass** ein Teilfeld des Datentelegramms eine Kanalkennung umfasst.

13. Datentelegramm nach Anspruch 12, **dadurch gekennzeichnet, dass** es sich um das SERCOS ® - Master Daten Telegramm (MDT) und/oder das SERCOS ® - Antriebstelegramm (AT) handelt.

## Claims

1. Method for operating a redundant communication network (12) in which at least two network users (10, 11) can be connected to one another in each case via at least two network channels (12a, 12b), wherein each network user (10, 11) has communication interfaces (P1, P2), **characterized in that** a network user (10, 11) determines by means of a message which network channel (12a, 12b) is connected to which of its communication interfaces (P1, P2).

2. Method according to Claim 1, **characterized in that** the network (12) comprises at least one master station (10) and at least one slave station (11), wherein the master station (10) communicates with the slave station (11) on only one first network channel (12a, 12b) during an initialization phase, the first network channel (12a, 12b) being defined as primary channel.

3. Method according to Claim 2, **characterized in that** after the initialization phase, messages are sent on all channels (12a, 12b), the messages on different channels (12a, 12b) preferably having the same content.

4. Method according to Claim 2 or 3, **characterized in that** the master station (10) anticyclically sends a channel identifier for channel identification when a new slave station (11) is accepted into the network (12).

5. Method according to Claim 1, **characterized in that** the network (12) comprises at least one master station (10) and at least one slave station (11), the master station (10) sending messages with channel identifier for channel identification.

6. Method according to one of the preceding claims, **characterized in that** the network (12) uses a ring-shaped (16) or line-shaped (17) network topology.

7. Network user (10, 11) of a redundant communication network (12) which can be connected to another network user (10, 11) via at least two network channels (12a, 12b) in each case, wherein the network user (10, 11) has communication interfaces (P1, P2), **characterized in that** the network user (10, 11) has means for identifying the network channel (12a, 12b), connected in each case to a communication interface (P1, P2), by means of a message.

8. Network user (10, 11) according to Claim 7, **characterized in that** the network (12) comprises at least one master station (10) and at least one slave station (11), wherein a ring-shaped (16) or line-shaped (17) network topology exists.

9. Network user (10, 11) according to one of Claims 7 to 8, **characterized in that** each communication interface (P1, P2) respectively comprises at least two connections, each connection performing either the function of an input and/or of an output.

10. Network (12) comprising a network user (10, 11) according to one of Claims 7 to 9.

11. Network (12) according to Claim 10, **characterized in that** it is a network (12) for automation purposes which comprises at least one drive unit (11) and one control unit (10) as network users (10, 11).

12. Data message, particularly for a network according to one of Claims 10 or 11, **characterized in that** a part-field of the data message comprises a channel identifier.

13. Data message according to Claim 12, **characterized in that** it is the SERCOS® - master data message (MDT) and/or the SERCOS® drive message (AT).

## Revendications

1. Procédé de gestion d'un réseau de communication redondant (12) selon lequel au moins deux participants au réseau (10, 11) peuvent être reliés par au moins deux canaux de réseau (12a, 12b), chacun des participants au réseau (10, 11) ayant des interfaces de communication (P1, P2),
**caractérisé en ce qu'**
un participant au réseau (10, 11) détermine à l'aide d'un télégramme, le canal de réseau (12a, 12b) auquel est raccordée son interface de communication (P1, P2).

2. Procédé selon la revendication 1,
**caractérisé en ce que**
le réseau (12) comporte au moins un participant central (10) et au moins un participant auxiliaire (11), le participant central (12) communiquant avec le participant auxiliaire (11) pendant une phase d'initialisation, seulement par un premier canal de réseau (12a, 12b), ce premier canal de réseau (12a, 12b) étant défini comme canal primaire.

3. Procédé selon la revendication 2,
**caractérisé en ce qu'**
après la phase d'initialisation, on envoie des télégrammes dans tous les canaux (12a, 12b), ces télégrammes ayant de préférence le même contenu pour les différents canaux (12a, 12b).

4. Procédé selon la revendication 2 ou 3,
**caractérisé en ce que**
le participant central (10) envoie une caractéristique de canal par un mode anticyclique à la réception d'un nouveau participant auxiliaire (11) dans le réseau (12) pour identifier le canal.

5. Procédé selon la revendication 1,
**caractérisé en ce que**
le réseau (12) comporte au moins un participant central (10) et au moins un participant auxiliaire (11), le participant central (10) émettant des télégrammes avec une caractéristique de canal pour l'identification de canal.

6. Procédé selon l'une des revendications précédentes,
**caractérisé en ce que**
le réseau (12) utilise une topologie de réseau de forme annulaire (16) ou linéaire (17).

7. Participant de réseau (10, 11) d'un réseau de communication redondant (12) relié chaque fois à un autre participant de réseau (10, 11) par au moins deux canaux de réseau (12a, 12b), les participants de réseau (10, 11) ayant des interfaces de communication (P1, P2),
**caractérisé en ce que**
les participants au réseau (10, 11) ont des moyens d'identification du canal de réseau (12a, 12b) respectivement reliés à une interface de communication (P1, P2) par l'intermédiaire d'un télégramme.

8. Participant au réseau (10, 11) selon la revendication 7,
**caractérisé en ce que**
le réseau (12) comporte au moins un participant central (10) et au moins un participant auxiliaire (11), la topologie du réseau étant une forme annulaire (16) ou une forme linéaire (17).

9. Participant au réseau (10, 11) selon l'une des revendications 7 à 8,
**caractérisé en ce que**
chaque interface de communication (P1, P2) comporte au moins deux branchements et chaque branchement exerce la fonction d'une entrée et/ou d'une sortie.

10. Réseau (12) comportant un participant auxiliaire (10, 11) selon l'une des revendications 7 à 9.

11. Réseau (12) selon la revendication 10,
**caractérisé en ce que**
le réseau (12) est prévu pour une automatisation comprenant au moins une unité d'entraînement (11) et une unité de commande (10) comme participant au réseau (10, 11).

12. Télégramme de données notamment pour un réseau selon l'une des revendications 10 ou 11,
**caractérisé en ce qu'**
un champ partiel du télégramme de données comporte une caractéristique de canal.

13. Télégramme de données selon la revendication 12,
**caractérisé en ce qu'**
il s'agit du télégramme de données maître (MDT) SERCOS ® et/ou du télégramme d'entraînement (AT) SERCOS ®.
